# EUROPÄISCHE PATENTSCHRIFT

(11) **EP 4 251 299 B1**
(45) Veröffentlichungstag und Bekanntmachung des Hinweises auf die Patenterteilung: **21.08.2024**
(21) Anmeldenummer: 21801849.7
(22) Anmeldetag: 22.10.2021
(51) Int. Cl.: B01D 46/00, B01D 46/12, B01D 46/52

(54) **FILTER, INSBESONDERE INNENRAUMFILTER EINES KRAFTFAHRZEUGS, VERWENDUNG EINES FILTERELEMENTS IN DEM FILTER UND KRAFTFAHRZEUG**
FILTER, IN PARTICULAR FILTER FOR THE INTERIOR OF A MOTOR VEHICLE, USE OF A FILTER ELEMENT IN THE FILTER AND MOTOR VEHICLE
FILTRE, EN PARTICULIER FILTRE DESTINÉ À L'HABITACLE D'UN VÉHICULE AUTOMOBILE, UTILISATION D'UN ÉLÉMENT FILTRANT DANS LE FILTRE ET VÉHICULE AUTOMOBILE

(30) Priorität: 30.11.2020 DE 102020131697
(43) Veröffentlichungstag der Anmeldung: 04.10.2023
(73) Patentinhaber: MANN+HUMMEL GmbH, 71636 Ludwigsburg (DE)
(72) Erfinder: SIEGELE, Thomas, 71727 Benningen (DE); SCHOEN, Mirco, 95197 Schauenstein (DE); JOOS, Bernd, 73547 Lorch (DE); KRAUTNER, Christoph, 84163 Marklkofen (DE); HOESL, Mathias, 94419 Reisbach (DE); LADDACH, Jens, 84130 Dingolfing (DE); STARZER, Matthias, 94405 Landau an der Isar (DE); SCHWIMMBECK, Tobias, 84130 Dingolfing (DE)
(74) Vertreter: Mann + Hummel Intellectual Property
(86) Internationale Anmeldenummer: PCT/EP2021/079374
(87) Internationale Veröffentlichungsnummer: WO 2022/111918

(56) Entgegenhaltungen:
- EP-A1- 1 208 902
- WO-A1-2020/008212
- DE-A1- 10 347 103
- DE-A1- 102014 014 396
- US-B1- 6 568 540

## Beschreibung

### Technisches Gebiet

Die vorliegende Erfindung betrifft einen Filter, insbesondere einen Innenraumfilter eines Kraftfahrzeugs, sowie eine Verwendung eines Filterelements in dem Filter, ein Filterelement sowie ein Kraftfahrzeug.

Die zunehmende Luftverunreinigung, insbesondere in Großstädten, in Verbindung mit dem Einsatz moderner Klimaanlagen macht es erforderlich, die von außen in den Innenraum eines Kraftfahrzeugs geleitete und aufbereitete bzw. klimatisierte Luft mittels geeigneter Filter zu reinigen. Hierfür kommen beispielsweise Partikelfilter, Geruchsfilter oder deren Kombination miteinander in Betracht, die in der Umgebungsluft enthaltene Schwebstoffe, Partikel und Gerüche möglichst gut herausfiltern bzw. adsorbieren sollen.

### Stand der Technik

Zur Filterung von Luft für den Innenraum eines Kraftfahrzeugs werden häufig gefaltete bzw. plissierte Filtermaterialien, wie etwa Filtervliese, die ein Faltenpack bilden, eingesetzt. Hierzu wird ein zunächst flächiger Filtermaterialbogen zickzackförmig gefaltet. Das Faltenpack wird beispielsweise von Seitenbändern und Kopfbändern oder einem sonstigen Rahmen gehalten. Derartige Filterelemente können in einer Filteraufnahme austauschbar fixiert sein. Die somit gebildete Filteranordnung kann in einer Klimaanlage eines entsprechenden Kraftfahrzeugs installiert sein.

Um den stetig steigenden Anforderungen an die Innenraumluftqualität entsprechen zu können, kommen in modernen Kraftfahrzeugen häufig so genannte HEPA-Filter (High-Efficiency Particulate Air) zum Einsatz.

HEPA-Filter werden zu deren Schutz und zur Verlängerung der Lebensdauer häufig mit einem in Strömungsrichtung vorgelagerten Vorfilter kombiniert, welcher eine gröbere Filterfeinheit hat als der HEPA-Filter.

Aus DE 10 2014 004 220 A1 ist ein Innenraumfilterelement, insbesondere zur Verwendung als Pestizidfilter einer landwirtschaftlichen Maschine, bekannt, welcher ein HEPA-Filterelement und ein Vorfilterelement kombiniert. Das Innenraumfilterelement weist einen Rahmen auf, in den das HEPA-Filterelement und das Vorfilterelement eingeklebt sind. Der Rahmen hat eine umlaufende Axialdichtung mit einem Vollprofil, mit der das Innenraumfilterelement in einem Montagezustand gegenüber einem Filtergehäuse abdichtbar ist. Das Vorfilterelement hat in Breiten- und Längenrichtung größere Abmessungen als das HEPA-Filterelement. Das Vorfilterelement verfügt über eine umlaufende Rahmeneinrichtung, mittels der es gegenüber dem Rahmen abgedichtet wird. Nachteilig hieran ist, dass sich das HEPA-Filterelement und das Vorfilterelement nicht unabhängig voneinander wechseln lassen und dass der Aufbau mit Rahmen eine vergleichsweise große Teileanzahl bedeutet.

Ferner ist aus US 6 568 540 B1 ein Filterelement mit einem plissierten Filtermediumkörper sowie einer den Filtermediumkörper umlaufenden Dichteinrichtung bekannt, wobei die Dichteinrichtung ein Hohlkammerprofil aufweist. Zudem ist eine Filtervorrichtung aus der DE 10347103 A1 bekannt.

### Offenbarung der Erfindung

Vor diesem Hintergrund liegt der vorliegenden Erfindung die Aufgabe zugrunde, ein Filter, insbesondere einen Innenraumfilter eines Kraftfahrzeugs, mit zumindest zwei Filterelementen bereitzustellen, bei dem beide Filterelemente, insbesondere HEPA-Filterelement und Vorfilterelement, unabhängig voneinander ausgewechselt werden können und der mit einer möglichst geringen Teileanzahl auskommt.

Diese Aufgabe wird durch einen Filter mit den Merkmalen des Anspruchs 1, eine Verwendung mit den Merkmalen des Anspruchs 14 gelöst.

Weitere Ausgestaltungen der Erfindung sind Gegenstand der Unteransprüche sowie der im Folgenden beschriebenen Ausführungsbeispiele der Erfindung.

Ein erster Aspekt der Erfindung betrifft einen Filter, insbesondere einen Innenraumfilter eines Kraftfahrzeugs. Der Filter umfasst ein Filtergehäuse mit zumindest einem Filtergehäuseteil und einem Filtergehäusedeckel. Das Filtergehäuse weist jeweils zumindest eine Lufteinströmöffnung und eine Luftausströmöffnung und einen Aufnahmeraum zur Aufnahme zumindest zweier Filterelemente auf. Die Filterelemente weisen jeweils einen Filtermediumkörper und eine den Filtermediumkörper umlaufende Rahmeneinrichtung auf. In dem Aufnahmeraum liegt zumindest eine radial einragende umlaufende Anlageschulter zur dichtenden Anlage einer filterelementseitigen Dichtung vor. Der Aufnahmeraum ist in einem Montagezustand von dem Filtergehäusedeckel verschließbar, der mit dem Filtergehäuseteil koppelbar ist. In dem Montagezustand übt der Filtergehäusedeckel eine zumindest teilweise axial gerichtete Klemmkraft auf die Rahmeneinrichtung eines ersten Filterelements aus. Die Rahmeneinrichtung des ersten Filterelements liegt in dem Montagezustand an ihrem dem Filtergehäusedeckel abgewandten axialen Ende an der Rahmeneinrichtung eines zweiten Filterelements an, wobei die Klemmkraft auf die Rahmeneinrichtung des zweiten Filterelements übertragen wird. Die Rahmeneinrichtung des zweiten Filterelements weist eine umlaufende Dichtung auf, die in dem Montagezustand vermittels der Klemmkraft auf die Anlageschulter des Filtergehäuses gepresst wird. Erfindungsgemäß weist die umlaufende Dichtung des zweiten Filterelements ein Hohlkammerprofil auf.

In einer bevorzugten Ausführungsform werden das erste und das zweite Filterelement seriell durchströmt, wobei bevorzugt das zweite Filterelement stromabwärts des ersten Filterelements vorliegt.

Der erfindungsgemäße Filter weist den Vorteil auf, dass das erste und das zweite Filterelement unabhängig voneinander ausgewechselt werden können, um insbesondere unterschiedlichen Lebensdauern der zwei Filterelemente Rechnung tragen zu können. So ist insbesondere, wenn es sich bei dem zweiten Filterelement um ein HEPA-Filterelement handelt und bei dem ersten Filterelement um ein korrespondierendes Vorfilterelement, die Lebensdauer des HEPA-Filterelements um ein Vielfaches höher als die Lebensdauer des Vorfilterelements. Ferner hat der erfindungsgemäße Filter den Vorteil, dass die Teileanzahl minimiert ist: Es ist kein separater Rahmen für die zwei Filterelemente nötig, sondern diese sind unmittelbar in das Filtergehäuse eingesetzt. Ferner wird eine Reduktion der Komplexität des Systems dadurch erreicht, dass der erfindungsgemäße Filter nur eine gemeinsame Dichtung zur Abdichtung der beider Filterelemente gegenüber dem Gehäuse einsetzt, wobei das erste Filterelement mittelbar über die Dichtung des zweiten Filterelements gegenüber dem Gehäuse abdichtbar ist.

Bevorzugt ist eine Drucksteifigkeit der Dichtung mit Hohlkammerprofil des zweiten Filterelements so dimensioniert, dass eine unzulässige mechanische Belastung der Rahmeneinrichtung des ersten Filterelements mit Dichtungsreaktionskräften der Dichtung des zweiten Filterelements vermieden wird.

Das Hohlkammerprofil der Dichtung des zweiten Filterelements stellt eine besonders hohe Nachgiebigkeit in Axialrichtung bereit, so dass auch mechanisch vergleichsweise schwach dimensionierte Rahmeneinrichtungen des ersten Filterelements die nötigen Vorspannkräfte vom Deckel in die Rahmeneinrichtung des zweiten Filterelements übertragen können. Insbesondere, wenn die Rahmeneinrichtung des ersten Filterelements aus einem Fasermaterial besteht, welches eine nur geringe Knicksteifigkeit aufweist, ist die abgestimmte Drucksteifigkeit der Dichtung des zweiten Filterelements mit Hohlkammerprofil ein wichtiger Parameter, um eine sichere und dauerhafte Abdichtung der Filterelemente im Filtergehäuse zu gewährleisten.

In einer weiteren Ausführungsform kann die Rahmeneinrichtung des ersten Filterelements in dem Montagezustand auf einem Anlageabschnitt der Dichtung des zweiten Filterelements anliegen, wodurch das erste Filterelement gegenüber dem zweiten Filterelement abgedichtet wird.

Der Anlageabschnitt kann insbesondere durch einen umlaufenden radial eingezogenen Bundabschnitt der Dichtung des zweiten Filterelements bereitgestellt werden.

In einer bevorzugten Ausführungsform kann die Rahmeneinrichtung des ersten Filterelements ein Vliesmaterial aufweisen oder daraus bestehen, wobei das Vliesmaterial insbesondere ein Spinnvlies ist, das bevorzugt zumindest anteilig Synthetikfasern, insbesondere aus PET, aufweist. Die Rahmeneinrichtung des ersten Filterelements kann bevorzugt sog. Seiten- und Kopfbänder aufweisen, die jeweils mit dem Filtermediumkörper verbunden, insbesondere verklebt, sind. Dies ist eine besonders kostengünstige Art der Bereitstellung einer Rahmeneinrichtung, da dies für verschiedene Abmessungen von Filtermediumkörpern mit einheitlicher Fertigungstechnik erfolgen kann. So aufgebaute Filterelemente haben jedoch eine nur geringe mechanische Belastbarkeit (Biegesteifigkeit, Drucksteifigkeit). Der erfindungsgemäße Filter eignet sich nun jedoch auch zur mittelbaren Abdichtung solcher Filterelemente, da durch die sehr geringe Drucksteifigkeit der Hohlkammerprofildichtung des zweiten Filterelements Beschädigungen der Rahmeneinrichtung des ersten Filterelements sicher ausgeschlossen werden können.

Das Vliesmaterial der Rahmeneinrichtung des ersten Filterelements kann eine Verfestigung aufweisen, um vorbestimmte mechanische Eigenschaften zu erhalten.

In einer bevorzugten Ausführungsform kann das Vliesmaterial der Rahmeneinrichtung des ersten Filterelements eine Luftdurchlässigkeit bei 200 Pa zwischen 200 und 2000 l/m²s, insbesondere zwischen 400 und 1000 l/m²s, aufweisen. Alternativ oder zusätzlich kann das Vliesmaterial der Rahmeneinrichtung des ersten Filterelements eine Dicke zwischen 0,6 und 5 mm, insbesondere zwischen 0,8 und 2 mm, aufweisen. Alternativ oder zusätzlich kann das Vliesmaterial der Rahmeneinrichtung des ersten Filterelements ein Flächengewicht zwischen 100 und 500 g/m², insbesondere zwischen 230 und 290 g/m², haben.

In einer weiteren Ausführung kann die Rahmeneinrichtung des ersten Filterelements entlang einer Längs- und/oder Breitseite des Filtermediumkörpers streifenförmig, bandförmig und/oder flächig ausgebildet ist.

Die Rahmeneinrichtung des ersten Filterelements kann in einer bevorzugten Ausführungsform an ihrem dem Filtergehäusedeckel zugewandten axialen Ende zumindest teilumfänglich einen zu dem Filtermediumkörper hin umgeklappten Randabschnitt haben. Der umgeklappte Randabschnitt stellt eine axial gerichtete Krafteinleitungsfläche zur Einleitung der Klemmkraft von dem Filtergehäusedeckel bereit. In Ausführungen, in denen die Rahmeneinrichtung des ersten Filterelements ein Vliesmaterial aufweist oder daraus besteht, kann der umgeklappte Randabschnitt als sog. "L-Winkel" ausgebildet sein, der durch sprichwörtliches Umklappen bzw. Falten gebildet wird. Der Randabschnitt kann auf einer Oberfläche des Filtermediumkörpers aufliegen. Ferner kann der Randabschnitt zur Ermöglichung einer sauberen Faltlinie beim Umklappen durch eine Perforation bzw. einen Einschnitt von der restlichen Rahmeneinrichtung abgegrenzt sein.

In einer noch weiteren Ausführungsform kann die Rahmeneinrichtung des zweiten Filterelements einen Kunststoffrahmen aufweisen, der bevorzugt einen zumindest teilweise umlaufenden radial auskragenden Bund aufweist, der die Dichtung trägt. Insbesondere liegt der radial auskragende Bund axial von einem axialen Ende des Filtermediumkörpers beabstandet vor. Der Kunststoffrahmen kann insbesondere durch Anspritzen an den Filtermediumkörper (sog. kunststoffumspritztes Filterelement) erhalten werden. Es ist aber auch möglich, dass der Filtermediumkörper in den Kunststoffrahmen eingeklebt wird, wobei der Filtermediumkörper in diesem Fall eine eigene sekundäre Rahmeneinrichtung aufweisen kann, insbesondere mit Seiten- und/oder Kopfbändern aus einem Fasermaterial.

In Ausführungen kann sich die Dichtung des zweiten Filterelements von dem radial auskragenden Bund in Axialrichtung bis in einen neben dem Filtermediumkörper des zweiten Filterelements liegenden Bereich erstrecken, so dass die Dichtung des zweiten Filterelements gewissermaßen den Filtermediumkörper des zweiten Filterelements axial "überlappt".

In Ausführungen kann die Dichtung des zweiten Filterelements an die Rahmeneinrichtung angespritzt sein, insbesondere in einem 2K-Spritzverfahren, oder als separates Teil auf die Rahmeneinrichtung aufgezogen sein, insbesondere in Form von entsprechend ablängbarer Meterware.

Eine besonders bevorzugte Ausführungsform sieht vor, dass die Dichtung des zweiten Filterelements eine Drucksteifigkeit in einem Bereich von 0,05 bis 0,7 N/mm pro mm Dichtungslinie, bevorzugt 0,1 bis 0,25 N/mm pro mm Dichtungslinie, aufweist. Bei einer Dimensionierung in diesem Drucksteifigkeitsbereich kann eine unzulässige mechanische Belastung der Rahmeneinrichtung des ersten Filterelements, insbesondere wenn diese aus einem Vliesmaterial besteht, besonders zuverlässig vermieden werden.

In einer ebenfalls bevorzugten Ausführungsform kann die Dichtung des zweiten Filterelements in einem Nicht-Verpressungszustand eine Axialerstreckung von 10 bis 22 mm, bevorzugt von 14 bis 18 mm, aufweisen und/oder in dem Montagezustand eine Verpressung von 10 % bis 40 %, bevorzugt von 12 % bis 20 %, erfahren.

Die Dichtung des zweiten Filterelements kann in Ausführungen einen Ethylen-Propylen-Dien-(Monomer)-Kautschuk aufweisen oder daraus bestehen, was vorteilhaft ist, da sich dieses Material durch besonders geringe Fogging-Werte auszeichnet. In Ausführungen können auch andere Elastomere, insbesondere thermoplastische Elastomere, und/oder Polyurethane eingesetzt werden. In Frage kommt insbesondere ein Elastomer gemäß der ISO 18064 in der Fassung zum Anmeldetag dieser Anmeldung, wie Kautschukmaterialien, TPE, PUR, geschäumte Polymere und sonstige dem Fachmann geeignet erscheinende Dichtungsmaterialien.

Gemäß einer weiteren Ausführungsform kann die Dichtung des zweiten Filterelements zumindest eine umlaufende radial auskragende Dichtlippe aufweisen, die dazu ausgebildet ist, in dem Montagezustand radial dichtend an einer Innenwand des Filtergehäuses, bevorzugt an einer axial verlaufenden Innenwand, anzuliegen. Durch eine Kombination der Dichtlippe mit dem (axial dichtenden) Hohlkammerprofil wird eine nochmals verbesserte Abdichtung der Filterelemente gegenüber dem Filtergehäuse erzielt. Die Dichtlippe kann insbesondere als druckunterstützte Dichtlippe ausgebildet sein, deren Dichtwirkung durch eine Differenzdruckeinwirkung erhöhbar ist.

Darüber hinaus kann das erste Filterelement zumindest in Breiten- oder Längenrichtung eine kleinere Abmessung aufweisen, als das zweite Filterelement. Mit Abmessung sind hierbei nicht die Abmessungen der Filtermediumkörper gemeint, sondern die absoluten Außenabmessungen inkl. der Rahmeneinrichtungen und Dichtung. Dadurch, dass die Abmessungen des ersten Filterelements kleiner sind, als die Abmessungen des zweiten Filterelements, wird die erfindungsgemäße Übertragung der Klemmkraft von der Rahmeneinrichtung des ersten Filterelements auf die Rahmeneinrichtung des zweiten Filterelements entscheidend vereinfacht.

In Ausführungen sind die Abmessungen des zweiten Filterelements inkl. Rahmeneinrichtung und Dichtung größer, als die Abmessungen des ersten Filterelements inkl. Rahmeneinrichtung, jedoch die Abmessungen des Filtermediumkörpers des zweiten Filterelements kleiner, als die Abmessungen des ersten Filterelements.

In einem konkreten Ausführungsbeispiel können die Abmessungen wie folgt sein:
Erstes Filterelement (inkl. Rahmeneinrichtung): ca. 456 x 172 mm
Zweites Filterelement (inkl. Rahmeneinrichtung und Dichtung): ca. 464 x 180 mm
Die Abmessungen des Filtermediumkörpers des zweiten Filterelements können ca. 441 x 157 mm betragen.

Die Höhe des ersten und/oder zweiten Filterelements kann zwischen 15 und 35 mm, bevorzugt zwischen 20 und 30 mm liegen, wobei das zweite Filterelement bevorzugt eine etwas größere Höhe hat als das erste Filterelement.

Eine weitere bevorzugte Ausführungsform sieht vor, dass die Filtermediumkörper des ersten und/oder zweiten Filterelements ein Filtermedium aufweisen, das zu einem Faltenbalg plissiert ist.

Hierbei kann ein Faltenabstand des Faltenbalgs des Filtermediumkörpers des zweiten Filterelements kleiner sein, als ein Faltenabstand des Faltenbalgs des Filtermediumkörpers des ersten Filterelements.

In Ausführungen kann die Rahmeneinrichtung des ersten Filterelements an ihrem dem zweiten Filterelement zugewandten axialen Ende axial den Filtermediumkörper des ersten Filterelements überragen. Hierdurch wird sichergestellt, dass die Klemmkraft ausschließlich durch die Rahmeneinrichtung des ersten Filterelements (und nicht durch den Filtermediumkörper) übertragen wird und der Filtermediumkörpers nicht gestaucht wird, was eine Verschlechterung der Filtrationsperformance (z. B. Kompaktieren von einzelnen Falten) zur Folge haben könnte.

In Varianten beträgt der Faltenabstand des Faltenbalgs des zweiten Filterelements weniger als 5 mm. Eine Materialdicke des Filtermaterials des Faltenbalgs des zweiten Filterelements ist beispielsweise zwischen 0,2 mm und 1 mm.

In Ausführungen kann der Filtermediumkörper des ersten Filterelements ein Partikelfiltermedium und/oder ein Gasadsorptionsmedium aufweisen und/oder der Filtermediumkörper des zweiten Filterelements ein HEPA-Filtermedium aufweisen. Das HEPA-Filtermedium kann insbesondere eine Membran aus einem expandieren PTFE aufweisen, welche sich durch einen besonders niedrigen Druckverlust auszeichnet sowie sehr dünn ist und damit besonders eng gefaltet werden kann, so dass im zweiten Filterelement eine sehr große Filterfläche zur Verfügung gestellt werden kann.

Das Filtermedium des ersten und/oder zweiten Filterelements kann gefaltet oder wellenförmig ausgebildet sein. Als Faltungen sind beispielsweise Zickzack- oder W-Faltungen bekannt. Das Filtermedium kann ferner geprägt und anschließend an Prägekanten unter Ausbildung von Faltkanten scharfkantig gefaltet sein. Als Ausgangsmaterial kann ein flächiger Filtermediumbogen dienen, welcher entsprechend umgeformt wird. Das Filtermedium kann beispielsweise ein Filtergewebe, Filtergelege, Filtervlies und/oder eine Filtermembrane umfassen.

Das Filtermedium des ersten und/oder zweiten Filterelements kann ferner ein- oder mehrlagig sein. Es kann ferner ein Adsorptionsmittel, wie etwa Aktivkohle, aufweisen. Weiterhin kann das Filtermedium des ersten und/oder zweiten Filterelements eine antimikrobielle und/oder antiallergene Wirkung aufweisen. Als antimikrobieller Stoff kommt beispielsweise Zink-Pyrithion oder Nanosilber, als anitallergener Stoff beispielsweise Polyphenol in Betracht.

Das Filtermedium des zweiten Filterelements entspricht vorzugsweise einer Effizienzklasse von H13 - H14 nach DIN EN 1822-3 in der Fassung zum Anmeldetag dieser Anmeldung. Die Abscheideleistung ist bevorzugt größer als 99,95 % (@MPPS). Es kann eine Grammatur zwischen 100 und 140 g/m² aufweisen. Besonders bevorzugt handelt es sich bei dem Filtermedium des zweiten Filterelements um einen Lagenaufbau, welcher zumindest eine expandierte PTFE-Membran aufweist, die beidseitig von einem Spundbond-Träger eingefasst ist. Die Grammatur der PTFE-Membran ist bevorzugt viel kleiner, insbesondere zumindest 10-mal kleiner, als die Grammatur der Spundbond-Träger.

Bei dem Filtermedium des ersten Filterelements kann es sich besonders bevorzugt um ein Kombifiltermedium handeln, d.h. ein Filtermedium, das sowohl eine Partikelfiltration als auch eine Gasadsorption ermöglicht. Die Grammatur kann zwischen 700 und 1200 g/m² liegen. Bevorzugt weist das Kombifiltermedium einen Lagenaufbau auf, insbesondere mit einem anti-mikrobakteriellen Träger (Spunlaid, Grammatur bevorzugt ca. 70 g/m²), einer Partikelfiltrationslage (Spunbond + Meltblown, Grammatur bevorzugt ca. 59 g/m²) sowie einer davon eingeschlossenen Aktivkohlelage. Die Aktivkohle hat insbesondere ein spezifisches Gewicht von ca. 700 g/m² und dient als Breitband Adsorber. Es können in der Aktivkohlelage bevorzugt verschiedene Aktivkohlesorten in Mischung vorliegen, z.B. zwei Drittel der Aktivkohle katalytisch aktiviert und ein Drittel der Aktivkohle mit Phosphorsäure imprägniert.

Ein weiterer Aspekt der Erfindung betrifft eine Verwendung eines Filterelements als zweites Filterelement in einem erfindungsgemäßen Filter. Das Filterelement hat einen Filtermediumkörper und eine den Filtermediumkörper umlaufende Rahmeneinrichtung, wobei ein Filtergehäusedeckel des Filters in einem Montagezustand eine zumindest teilweise axial gerichtete Klemmkraft auf eine Rahmeneinrichtung eines ersten Filterelements ausübt. Die Rahmeneinrichtung des ersten Filterelements liegt hierbei an ihrem dem Filtergehäusedeckel abgewandten axialen Ende in dem Montagezustand an der Rahmeneinrichtung des Filterelements an, wobei die Klemmkraft auf die Rahmeneinrichtung des Filterelements übertragen wird. Die Rahmeneinrichtung des Filterelements weist eine umlaufende Dichtung auf, die in dem Montagezustand vermittels der Klemmkraft auf eine Anlageschulter des Filtergehäuses pressbar ist. Die umlaufende Dichtung des Filterelements weist ein Hohlkammerprofil auf, wobei bevorzugt eine Drucksteifigkeit der Dichtung mit Hohlkammerprofil so dimensioniert ist, dass eine unzulässige mechanische Belastung der Rahmeneinrichtung des ersten Filterelements mit Dichtungsreaktionskräften vermieden wird.

Alle bezüglich des erfindungsgemäßen Filters offenbarten Merkmale, Merkmalskombinationen und Vorteile sind auf die erfindungsgemäße Verwendung übertragbar und vice versa.

Weitere mögliche Implementierungen der Erfindung umfassen auch nicht explizit genannte Kombinationen von zuvor oder im Folgenden bezüglich der Ausführungsbeispiele beschriebenen Merkmale oder Verfahrensschritte. Dabei wird der Fachmann auch Einzelaspekte als Verbesserungen oder Ergänzungen zu der jeweiligen Grundform der Erfindung hinzufügen.

Im Weiteren wird die Erfindung anhand von Ausführungsbeispielen unter Bezugnahme auf die beigelegten Figuren näher erläutert.

### Kurze Beschreibung der Zeichnungen

Es zeigen dabei:
- Fig. 1: eine schematische Darstellung eines erfindungsgemäßen Kraftfahrzeugs;
- Fig. 2: eine isometrische Ansicht eines erfindungsgemäßen Filters;
- Fig. 3: ein Längsschnitt eines erfindungsgemäßen Filters;
- Fig. 4: Detail B gemäß Fig. 3;
- Fig. 5: eine isometrische Ansicht eines Filterelements des erfindungsgemäßen Filters;
- Fig. 6: ein Längsschnitt eines Filterelements des erfindungsgemäßen Filters.

### Ausführungsform(en) der Erfindung

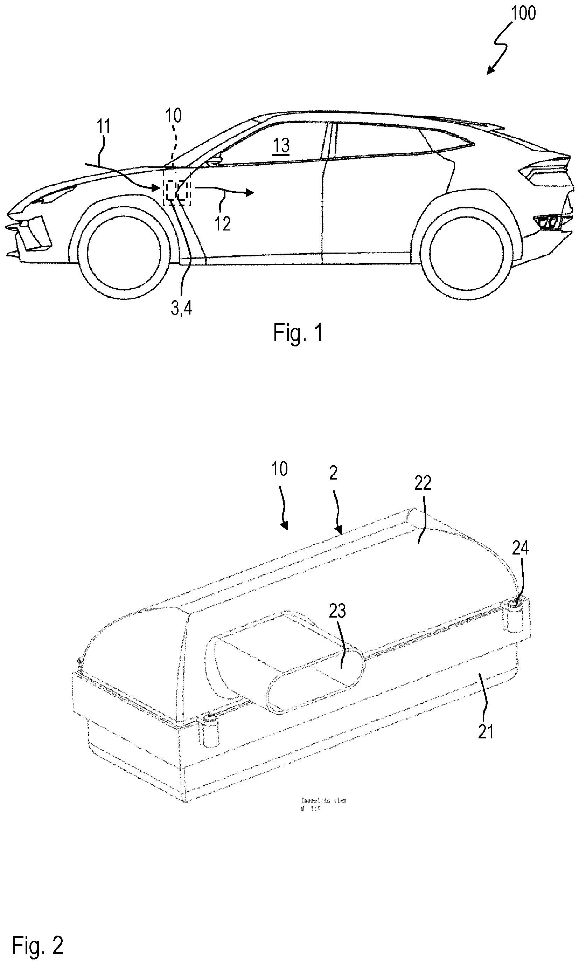

In **Fig. 1** ist ein erfindungsgemäßes Kraftfahrzeug 100 in einer schematischen Darstellung gezeigt. Das Kraftfahrzeug 100 verfügt über einen erfindungsgemäßen Innenraumfilter 10, mittels dem aus dem Außenraum stammende Rohluft 11 gereinigt wird und dem Innenraum 13 als Reinluft 12 zuführbar ist. Der Innenraumfilter 10 hat zwei Filterelemente, ein erstes Filterelement 3 und ein zweites Filterelement 4, die insbesondere seriell durchströmt werden. Bei dem zweiten Filterelement 4 kann es sich um ein HEPA-Filterelement handeln, und beim ersten Filterelement 3 um ein hinsichtlich seiner Filtrationsparameter auf das HEPA-Filterelement abgestimmtes Vorfilterelement.

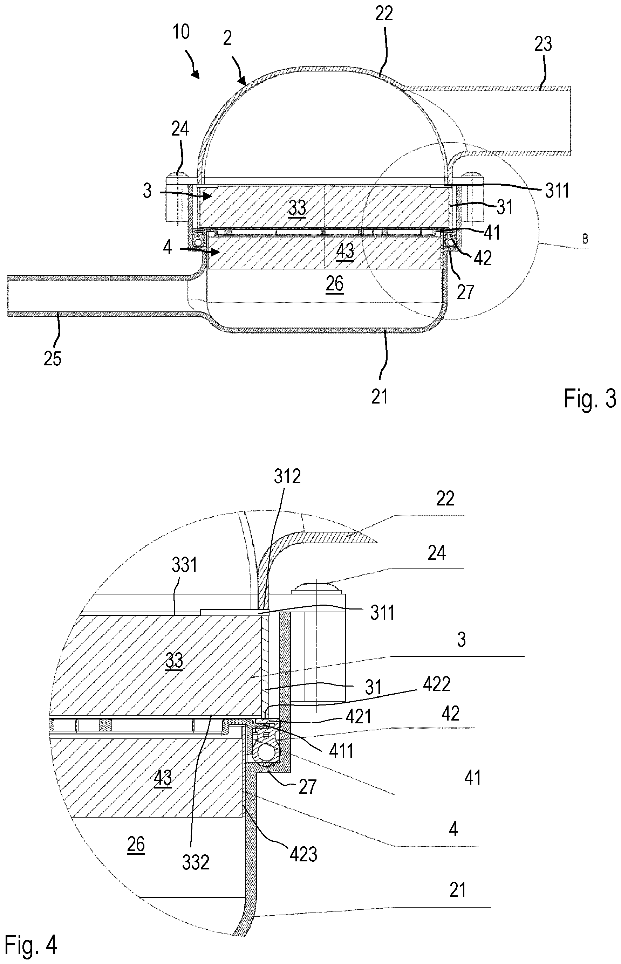

Der erfindungsgemäße Innenraumfilter 10 ist in **Fig. 2** in einer isometrischen Ansicht gezeigt. Der Innenraumfilter 10 hat ein Filtergehäuse 2 mit einem Filtergehäuseteil 21 und einem Filtergehäusedeckel 22, der das Filtergehäuse 2 verschließt. Der Filtergehäusedeckel 22 ist über Verbindungselemente 24, hier Schrauben, mit dem Filtergehäuseteil 21 lösbar verbunden, so dass im Servicefall die darin aufgenommenen Filterelemente austauschbar sind. Das Filtergehäuse 2 hat eine Einlassöffnung 23 sowie eine Auslassöffnung 25 (siehe Fig. 3). Durch die Einlassöffnung 23 ist ungefilterte Rohluft dem Filtergehäuse 2 zuführbar und durch die Auslassöffnung gefilterte Reinluft aus dem Filtergehäuse 2 abführbar. In dem Filtergehäuse 2 sind zwei Filterelemente angeordnet, welche die Luft filtern, was im Längsschnitt der **Fig. 3** gezeigt ist.

Das Filtergehäuse 2 stellt einen Aufnahmeraum 26 bereit, in dem ein erstes Filterelement 3 sowie ein zweites Filterelement 4 angeordnet sind. Im Betrieb des Filters 2 werden die Filterelemente 3, 4 seriell durchströmt, d.h. der Luftstrom führt von der Einlassöffnung 23 durch das erste Filterelement 3, dann durch das zweite Filterelement 4 bis hin zur Auslassöffnung 25.

Die Filterelemente 3, 4 weisen jeweils eine Rahmeneinrichtung 31, 41 sowie einen Filtermediumkörper 33, 43 auf, wobei die Filtermediumkörper 33, 43 bevorzugt ein zu einem Faltenbalg gefaltetes Filtermedium aufweisen.

Die Rahmeneinrichtung 31 des ersten Filterelements 3 weist ein streifenförmiges Vliesmaterial auf, welches mit dem Filtermediumkörper 33 des ersten Filterelements 3 verbunden ist. Bei der Rahmeneinrichtung 31 handelt es sich um sog. Kopf- und Seitenbänder. Diese Filterelementkonfiguration hat den Vorteil, besonders kostengünstig herstellbar zu sein, ist jedoch nur sehr begrenzt mechanisch belastbar, insbesondere aufgrund einer geringen Biege- und Drucksteifigkeit.

Die Rahmeneinrichtung 41 des zweiten Filterelements 4 umfasst einen Kunststoffrahmen, mit dem der Filtermediumkörper 43 des zweiten Filterelements 4 verbunden ist. Der Filtermediumkörper 43 des zweiten Filterelements 4 weist eine sekundäre Rahmeneinrichtung 423 auf, die - wie das erste Filterelement 3 - ein streifenförmiges Vliesmaterial aufweist, die sog. Kopf- und Seitenbänder. Der Filtermediumkörper 43 ist mit dem Kunststoffrahmen der Rahmeneinrichtung 41 des zweiten Filterelements 4 verklebt oder auf andere dem Fachmann geeignet erscheinende Weise verbunden. Alternativ kann es sich bei dem zweiten Filterelement 4 auch um ein kunststoffumspritztes Filterelement handeln (nicht figurativ gezeigt), bei dem auf die sekundäre Rahmeneinrichtung 423 verzichtet werden kann, da die Rahmeneinrichtung 41 durch das Umspritzen direkt stoffschlüssig an den Filtermediumkörper 43 angebunden wird.

Die Rahmeneinrichtung 41 des zweiten Filterelements 4 weist eine umlaufende Dichtung 42 auf, die ein Hohlkammerprofil umfasst, welches eine besonders geringe Drucksteifigkeit aufweist.

In dem gezeigten Montagezustand des Filters 10 wird an einem dem Filtergehäusedeckel 22 nahen axialen Ende der Rahmeneinrichtung 31 des ersten Filterelements 3 eine Klemmkraft vom Filtergehäusedeckel 22 in die Rahmeneinrichtung 31 des ersten Filterelements 3 eingeleitet. Die Rahmeneinrichtung 31 des ersten Filterelements 3 liegt an ihrem dem Filtergehäusedeckel 22 abgewandten axialen Ende an der Rahmeneinrichtung 41 des zweiten Filterelements 4 an und überträgt die Klemmkraft. Hierdurch wird die umlaufende Dichtung 42 des zweiten Filterelements 4 an der radial einragenden umlaufenden Anlageschulter 27 des Filtergehäuses 2 unter einer vorbestimmten Verpressung zur dichtenden Anlage gebracht.

Das erste Filterelement 3 weist keine eigene Dichtung gegenüber dem Gehäuse 2 auf, sondern ist mittelbar über die Dichtung 42 des zweiten Filterelements gegenüber dem Gehäuse 2 abgedichtet.

Die Schnittstelle zwischen dem ersten und zweiten Filterelement 3, 4 sowie dem Filtergehäuseteil 21 und dem Filtergehäusedeckel 22 ist in Detail B in **Fig. 4** in einem etwas größeren Maßstab dargestellt.

Die Rahmeneinrichtung 31 des ersten Filterelements 3 weist an ihrem dem Deckel 22 nahen axialen Ende einen zu dem Filtermediumkörper 33 hin umgeklappten Randabschnitt 311 auf, der eine axial gerichtete Krafteinleitungsfläche 312 zur Einleitung der Klemmkraft von dem Filtergehäusedeckel 22 bereitstellt. Der Randabschnitt 311 liegt auf einer anströmseitigen Fläche 331 des Filtermediumkörpers 33 auf und trägt dazu bei, die Steifigkeit des ersten Filterelements 3 insgesamt zu erhöhen, was insbesondere unter Einwirkung der Klemmkraft von Vorteil ist.

An ihrem dem Filtergehäusedeckel 22 abgewandten axialen Ende überragt die Rahmeneinrichtung 31 des ersten Filterelements 3 den Filtermediumkörper 33 an einer abströmseitigen Fläche 332, so dass sichergestellt ist, dass die Klemmkraft ausschließlich über die Rahmeneinrichtung 31 des ersten Filterelements 3 auf die Rahmeneinrichtung 41 des zweiten Filterelements 4 übertragen wird und nicht durch eine Anlage von Abschnitten des Filtermediumkörpers 33 des ersten Filterelements 3.

Die umlaufende Dichtung 42 der Rahmeneinrichtung 41 des zweiten Filterelements 4 weist einen Anlageabschnitt 422 auf, der durch einen radial eingezogenen Bundabschnitt 421 der Dichtung 42 bereitgestellt wird. An diesem Anlageabschnitt 422 liegt die Rahmeneinrichtung 31 des ersten Filterelements 3 unter Übertragung der Klemmkraft axial an. Da der Bundabschnitt 421 aus dem Material der Dichtung 42 besteht, wird hierdurch neben einer Übertragung der Klemmkraft gleichzeitig das erste Filterelement mittelbar gegenüber dem Filtergehäuse 2 abgedichtet.

Die umlaufende Dichtung 42, welche das Hohlkammerprofil aufweist, ist auf einen radial auskragenden Bund 411 der Rahmeneinrichtung 41 des zweiten Filterelements 4 aufgezogen und wird im Montagezustand axial gegenüber einer radial gerichteten Wand der Anlageschulter 27 des Filtergehäuses 2 verpresst. Die Dichtung 42 ist in einer Art Kammer des Filtergehäuses 2 aufgenommen, wobei die Kammer durch die Anlageschulter 27 und einen axial verlaufenden Wandabschnitt des Filtergehäuses 2 gebildet wird. Der axial verlaufende Wandabschnitt verhindert hierbei unter Einwirkung der Klemmkraft ein übermäßiges radiales "Ausweichen" der Dichtung, welches die Dichtwirkung vermindern könnte. In Ausführungen (nicht figurativ gezeigt) kann die umlaufende Dichtung 42 zumindest eine radial ausragende Dichtlippe haben, die radial dichtend an dem axial verlaufenden Wandabschnitt zur Anlage gebracht werden kann, was das Potential hat, die Dichtwirkung weiter zu verbessern. Die gezeigte Dichtungskontur 42 weist keine dezidierte Lippengeometrie auf, sondern liegt im Bereich der Ebene des radial auskragenden Bundes 411 der Rahmeneinrichtung 41 radial außen an dem axial verlaufenden Wandabschnitt an.

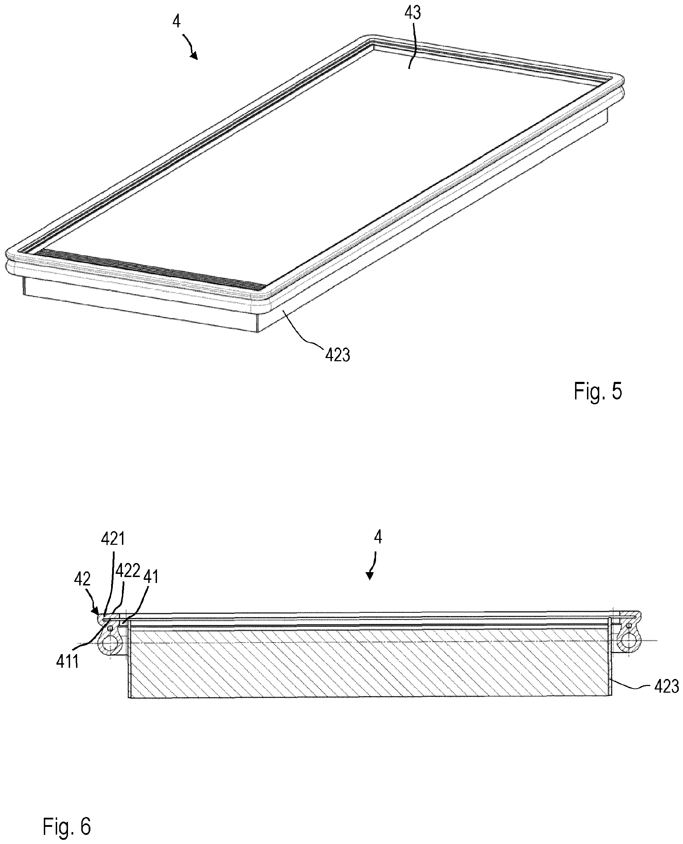

In **Fig. 5** und **6** ist ein Filterelement 4 eines erfindungsgemäßen Filters dargestellt, bei dem es sich um das zweite Filterelement des erfindungsgemäßen Filters handelt. Es ist hierbei eine Ausführung des Filtermediumkörpers 43 als plissierter Faltenbalg angedeutet, die Erfindung ist jedoch ausdrücklich nicht hierauf beschränkt.

### Verwendete Bezugszeichen

- 100: Kraftfahrzeug
- 10: Filter
- 11: Rohluft
- 12: Reinluft
- 13: Innenraum
- 2: Filtergehäuse
- 21: Filtergehäuseteil
- 22: Filtergehäusedeckel
- 23: Lufteinlass
- 24: Verbindungselement
- 25: Luftauslass
- 26: Aufnahmeraum
- 27: Anlageschulter
- 3: Erstes Filterelement
- 31: Rahmeneinrichtung des ersten Filterelements
- 311: Randabschnitt der Rahmeneinrichtung des ersten Filterelements
- 312: Krafteinleitungsfläche
- 33: Filtermediumkörper des ersten Filterelements
- 4: Zweites Filterelement
- 41: Rahmeneinrichtung des zweiten Filterelements
- 411: Auskragender Bund der Rahmeneinrichtung des zweiten Filterelements
- 42: Umlaufende Dichtung mit Hohlkammerprofil
- 421: Bundabschnitt der umlaufenden Dichtung mit Hohlkammerprofil
- 422: Anlageabschnitt der umlaufenden Dichtung mit Hohlkammerprofil
- 423: Sekundäre Rahmeneinrichtung des zweiten Filterelements
- 43: Filtermediumkörper des zweiten Filterelements

## Patentansprüche

1. Filter (10), insbesondere Innenraumfilter eines Kraftfahrzeugs (100),
- umfassend ein Filtergehäuse (2) mit zumindest einem Filtergehäuseteil (21) und einem Filtergehäusedeckel (22), wobei das Filtergehäuse (2) jeweils zumindest eine Lufteinströmöffnung (23) und eine Luftausströmöffnung (25) und einen Aufnahmeraum (26) zur Aufnahme zumindest zweier Filterelemente (3, 4) aufweist, die jeweils einen Filtermediumkörper (33, 43) und eine den Filtermediumkörper (33, 43) umlaufende Rahmeneinrichtung (31, 41) aufweisen,
- wobei in dem Aufnahmeraum (26) zumindest eine radial einragende umlaufende Anlageschulter (27) zur dichtenden Anlage einer filterelementseitigen Dichtung (42) vorliegt,
- und wobei der Aufnahmeraum (26) von dem Filtergehäusedeckel (22) verschließbar ist, der in einem Montagezustand mit dem Filtergehäuseteil (21) koppelbar ist, **dadurch gekennzeichnet, dass**
- der Filtergehäusedeckel (22) in dem Montagezustand eine zumindest teilweise axial gerichtete Klemmkraft auf die Rahmeneinrichtung (31) eines ersten Filterelements (3) ausübt, und
- die Rahmeneinrichtung (31) des ersten Filterelements (3) an ihrem dem Filtergehäusedeckel (22) abgewandten axialen Ende in dem Montagezustand an der Rahmeneinrichtung (41) eines zweiten Filterelements (4) anliegt, wobei die Klemmkraft auf die Rahmeneinrichtung (41) des zweiten Filterelements (4) übertragen wird,
- wobei die Rahmeneinrichtung (41) des zweiten Filterelements (4) eine umlaufende Dichtung (42) aufweist, die in dem Montagezustand vermittels der Klemmkraft auf die Anlageschulter (27) des Filtergehäuses (2) gepresst wird,
- und wobei die umlaufende Dichtung (42) des zweiten Filterelements (4) ein Hohlkammerprofil aufweist.

2. Filter (10) nach Anspruch 1, wobei eine Drucksteifigkeit der Dichtung (42) des zweiten Filterelements (4) so dimensioniert ist, dass eine unzulässige mechanische Belastung der Rahmeneinrichtung (31) des ersten Filterelements (3) mit Dichtungsreaktionskräften der Dichtung (42) des zweiten Filterelements (4) vermieden wird.

3. Filter (10) nach Anspruch 1 oder 2, wobei die Rahmeneinrichtung (31) des ersten Filterelements (3) in dem Montagezustand auf einem Anlageabschnitt (422) der Dichtung (42) des zweiten Filterelements (4) anliegt, wodurch das erste Filterelement (3) gegenüber dem zweiten Filterelement (4) abgedichtet wird.

4. Filter (10) nach Anspruch 3, wobei der Anlageabschnitt (422) durch einen umlaufenden radial eingezogenen Bundabschnitt (421) der Dichtung (42) des zweiten Filterelements (4) bereitgestellt wird.

5. Filter (10) nach einem der vorigen Ansprüche, wobei die Rahmeneinrichtung (31) des ersten Filterelements (3) ein Vliesmaterial aufweist oder daraus besteht, wobei das Vliesmaterial insbesondere ein Spinnvlies ist, das bevorzugt zumindest anteilig Synthetikfasern, insbesondere aus PET, aufweist.

6. Filter (10) nach Anspruch 5, wobei das Vliesmaterial der Rahmeneinrichtung (31) des ersten Filterelements (3)
- eine Luftdurchlässigkeit bei 200 Pa zwischen 200 und 2000 l/m²s, bevorzugt zwischen 400 und 1000 l/m²s, aufweist und/oder
- eine Dicke zwischen 0,6 und 5 mm, bevorzugt zwischen 0,8 und 2 mm, aufweist und/oder
- ein Flächengewicht zwischen 100 und 500 g/m², bevorzugt zwischen 230 und 290 g/m², aufweist.

7. Filter (10) nach Anspruch 5 oder 6, wobei die Rahmeneinrichtung (31) des ersten Filterelements (3) entlang einer Längs- und/oder Breitseite des Filtermediumkörpers (33) streifenförmig, bandförmig und/oder flächig ausgebildet ist.

8. Filter (10) nach einem der vorigen Ansprüche, wobei die Rahmeneinrichtung (31) des ersten Filterelements (3) an ihrem dem Filtergehäusedeckel (22) zugewandten axialen Ende zumindest teilumfänglich einen zu dem Filtermediumkörper (33) hin umgeklappten Randabschnitt (311) hat, der eine axial gerichtete Krafteinleitungsfläche (312) zur Einleitung der Klemmkraft von dem Filtergehäusedeckel (22) bereitstellt.

9. Filter (10) nach einem der vorigen Ansprüche, wobei die Rahmeneinrichtung (41) des zweiten Filterelements (4) einen Kunststoffrahmen aufweist, der bevorzugt einen zumindest teilweise umlaufenden radial auskragenden Bund (411) aufweist, der die Dichtung (42) trägt, wobei der radial auskragende Bund (411) bevorzugt axial von einem axialen Ende des Filtermediumkörpers (43) beabstandet vorliegt.

10. Filter (10) nach Anspruch 9, wobei sich die Dichtung (42) des zweiten Filterelements (4) von dem radial auskragenden Bund (411) in Axialrichtung bis in einem neben dem Filtermediumkörper (43) des zweiten Filterelements (4) liegenden Bereich erstreckt.

11. Filter (10) nach einem der vorigen Ansprüche, wobei die Dichtung (42) des zweiten Filterelements (4) eine Drucksteifigkeit in einem Bereich von 0,05 bis 0,7 N/mm pro mm Dichtungslinie, bevorzugt 0,1 bis 0,25 N/mm pro mm Dichtungslinie, aufweist.

12. Filter (10) nach einem der vorigen Ansprüche, wobei die Rahmeneinrichtung (31) des ersten Filterelements (3) an ihrem dem zweiten Filterelement (4) zugewandten axialen Ende axial den Filtermediumkörper (33) des ersten Filterelements (3) überragt.

13. Filter (10) nach einem der vorigen Ansprüche, wobei der Filtermediumkörper (31) des ersten Filterelements (3) ein Partikelfiltermedium und/oder ein Gasadsorptionsmedium aufweist und/oder der Filtermediumkörper (43) des zweiten Filterelements (4) ein HEPA-Filtermedium aufweist.

14. Verwendung eines Filterelements (4) als zweites Filterelement (4) in einem Filter (10) nach einem der Ansprüche 1 bis 13, wobei das Filterelement (4) einen Filtermediumkörper (43) und eine den Filtermediumkörper (43) umlaufende Rahmeneinrichtung (41) aufweist, wobei ein Filtergehäusedeckel (22) in einem Montagezustand eine zumindest teilweise axial gerichtete Klemmkraft auf eine Rahmeneinrichtung (31) eines ersten Filterelements (3) ausübt, und
- die Rahmeneinrichtung (31) des ersten Filterelements (3) an ihrem dem Filtergehäusedeckel (22) abgewandten axialen Ende in dem Montagezustand an der Rahmeneinrichtung des Filterelements anliegt, wobei die Klemmkraft auf die Rahmeneinrichtung des Filterelements (4) übertragen wird,
- wobei die Rahmeneinrichtung (41) des Filterelements (4) eine umlaufende Dichtung (42) aufweist, die in dem Montagezustand vermittels der Klemmkraft auf eine Anlageschulter (27) des Filtergehäuses (2) pressbar ist,
- und wobei die umlaufende Dichtung (42) des Filterelements (4) ein Hohlkammerprofil aufweist.

15. Kraftfahrzeug (100), umfassend einen Filter (10) nach einem der Ansprüche 1 bis 13.

## Claims

1. A filter (10), in particular a cabin air filter of a motor vehicle (100),
- comprising a filter housing (2) having at least one filter housing component (21) and a filter housing cover (22), wherein the filter housing (2) features respectively at least one air inflow opening (23) and one air outflow opening (25) and a receiving space (26) for accommodating at least two filter elements (3, 4), which feature respectively a filter medium body (33, 43) and a frame device (31, 41) extending around the filter medium body (33, 43),
- wherein at least one radially projecting circumferential abutment shoulder (27) is present in the receiving space (26) for a sealing abutment of a seal (42) on the filter element side,
- and wherein the receiving space (26) is closable by the filter housing cover (22), which is coupleable with the filter housing component (21) in an assembled state,
**characterized in that**
- the filter housing cover (22) exerts, in the assembled state, an at least partially axially directed clamping force on the frame device (31) of a first filter element (3), and
- the frame device (31) of the first filter element (3) rests against the frame device (41) of a second filter element (4) at its axial end facing away from the filter housing cover (22) in the assembled state, wherein the clamping force is transmitted to the frame device (41) of the second filter element (4),
- wherein the frame device (41) of the second filter element (4) features a circumferential seal (42) which is, in the assembled state, pressed onto the abutment shoulder (27) of the filter housing (2) using the clamping force,
- and wherein the circumferential seal (42) of the second filter element (4) features a hollow chamber profile.

2. The filter (10) according to claim 1, wherein a compressive rigidity of the seal (42) of the second filter element (4) is dimensioned such that an inadmissible mechanical load on the frame device (31) of the first filter element (3) with sealing reaction forces of the seal (42) of the second filter element (4) is avoided.

3. The filter (10) according to claim 1 or 2, wherein the frame device (31) of the first filter element (3) rests, in the assembled state, against an abutment portion (422) of the seal (42) of the second filter element (4), so that the first filter element (3) is sealed against the second filter element (4).

4. The filter (10) according to claim 3, wherein the abutment portion (422) is provided by a circumferential radially retracted collar portion (421) of the seal (42) of the second filter element (4).

5. The filter (10) according to one of the preceding claims, wherein the frame device (31) of the first filter element (3) features or consists of a non-woven fabric material, wherein the non-woven fabric material is in particular a spunbonded fabric, which preferably at least partly features synthetic fibers, in particular of PET.

6. The filter (10) according to claim 5, wherein the non-woven fabric material of the frame device (31) of the first filter element (3)
- features an air permeability at 200 Pa between 200 and 2000 l/m²s, preferably between 400 and 1000 l/m²s, and/or
- features a thickness between 0.6 and 5 mm, preferably between 0.8 and 2 mm, and/or
- features a grammage between 100 and 500 g/m², preferably between 230 and 290 g/m².

7. The filter (10) according to claim 5 or 6, wherein the frame device (31) of the first filter element (3) is designed to be strip-shaped, band-shaped and/or flat along a longitudinal and/or broad side of the filter medium body (33).

8. The filter (10) according to one of the preceding claims, wherein the frame device (31) of the first filter element (3) has, on its axial end facing the filter housing cover (22), at least partially circumferentially an edge portion (311) which is folded down towards the filter medium body (33) and which provides an axially directed force introduction surface (312) for introducing the clamping force from the filter housing cover (22).

9. The filter (10) according to one of the preceding claims, wherein the frame device (41) of the second filter element (4) features a plastic frame which preferably features an at least partially circumferential radially projecting collar (411) which supports the seal (42), wherein the radially projecting collar (411) is preferably present spaced apart axially from an axial end of the filter medium body (43).

10. The filter (10) according to claim 9, wherein the seal (42) of the second filter element (4) extends from the radially projecting collar (411) in the axial direction to an area in which it lies adjacent to the filter medium body (43) of the second filter element (4).

11. The filter (10) according to one of the preceding claims, wherein the seal (42) of the second filter element (4) features a compressive rigidity in the area of 0.05 to 0.7 N/mm per mm sealing line, preferably 0.1 to 0.25 N/mm per mm sealing line.

12. The filter (10) according to one of the preceding claims, wherein the frame device (31) of the first filter element (3) projects beyond the filter medium body (33) of the first filter element (3) in the axial direction at its axial end facing the second filter element (4).

13. The filter (10) according to one of the preceding claims, wherein the filter medium body (31) of the first filter element (3) features a particulate filter medium and/or a gas adsorption medium and/or the filter medium body (43) of the second filter element (4) features a HEPA filter medium.

14. A use of a filter element (4) as a second filter element (4) in a filter (10) according to one of the claims 1 to 13, wherein the filter element (4) features a filter medium body (43) and a frame device (41) extending around the filter medium body (43), wherein a filter housing cover (22) exerts, in an assembled state, an at least partially axially directed clamping force on a frame device (31) of a first filter element (3), and
- the frame device (31) of the first filter element (3) rests against the frame device of the filter element at its axial end facing away from the filter housing cover (22) in the assembled state, wherein the clamping force is transmitted to the frame device of the filter element (4),
- wherein the frame device (41) of the filter element (4) features a circumferential seal (42) which, in the assembled state, can be pressed onto an abutment shoulder (27) of the filter housing (2) by means of the clamping force,
- and wherein the circumferential seal (42) of the filter element (4) features a hollow chamber profile.

15. A motor vehicle (100) comprising a filter (10) according to one of the claims 1 to 13.

## Revendications

1. Filtre (10), notamment filtre d'habitacle d'un véhicule automobile (100),
- comprenant un boîtier de filtre (2) ayant au moins une partie de boîtier de filtre (21) et un couvercle de boîtier de filtre (22), dans lequel le boîtier de filtre (2) présente respectivement au moins une ouverture d'entrée d'air (23) et une ouverture de sortie d'air (25) et un espace de réception (26) pour recevoir au moins deux éléments filtrants (3, 4) qui présentent respectivement un corps de milieu filtrant (33, 43) et un dispositif de cadre (31, 41) entourant le corps de milieu filtrant (33, 43),
- dans lequel au moins un épaulement de contact périphérique (27) faisant saillie radialement est présent dans l'espace de réception (26) pour un appui étanche d'un joint d'étanchéité (42) du côté de l'élément filtrant,
- et dans lequel l'espace de réception (26) peut être fermé par le couvercle du boîtier de filtre (22), qui peut être accouplé, à l'état monté, à la partie du boîtier de filtre (21),
**caractérisé en ce que**
- le couvercle de boîtier de filtre (22) exerce, à l'état monté, une force de serrage dirigée au moins partiellement axialement sur le dispositif de cadre (31) d'un premier élément filtrant (3), et
- le dispositif de cadre (31) du premier élément filtrant (3) s'applique, à son extrémité axiale opposée au couvercle de boîtier de filtre (22), à l'état monté, contre le dispositif de cadre (41) d'un second élément filtrant (4), dans lequel la force de serrage est transmise au dispositif de cadre (41) du second élément filtrant (4),
- dans lequel le dispositif de cadre (41) du second élément filtrant (4) comprend un joint d'étanchéité périphérique (42) qui, à l'état monté, est pressé sur l'épaulement de contact (27) du boîtier de filtre (2) au moyen de la force de serrage,
- et dans lequel le joint d'étanchéité périphérique (42) du second élément filtrant (4) présente un profil de chambre creuse.

2. Filtre (10) selon la revendication 1, dans lequel une rigidité à la compression du joint d'étanchéité (42) du second élément filtrant (4) est dimensionnée de manière à éviter une charge mécanique inadmissible du dispositif de cadre (31) du premier élément filtrant (3) avec des forces de réaction d'étanchéité du joint d'étanchéité (42) du second élément filtrant (4).

3. Filtre (10) selon la revendication 1 ou 2, dans lequel le dispositif de cadre (31) du premier élément filtrant (3) est, à l'état monté, en appui sur une zone de contact (422) du joint d'étanchéité (42) du second élément filtrant (4), ce qui rend le premier élément filtrant (3) étanche par rapport au second élément filtrant (4).

4. Filtre (10) selon la revendication 3, dans lequel la zone de contact (422) est mise à disposition par une section périphérique à collet (421), radialement en retrait, du joint d'étanchéité (42) du second élément filtrant (4).

5. Filtre (10) selon l'une quelconque des revendications précédentes, dans lequel le dispositif de cadre (31) du premier élément filtrant (3) présente un matériau non tissé ou est constitué d'un tel matériau, le matériau non tissé étant notamment un tissu non tissé filé-lié qui présente de préférence au moins en partie des fibres synthétiques, notamment en PET.

6. Filtre (10) selon la revendication 5, dans lequel le matériau non tissé du dispositif de cadre (31) du premier élément filtrant (3)
- présente une perméabilité à l'air à 200 Pa comprise entre 200 et 2000 l/m²s, de préférence entre 400 et 1000 l/m²s, et/ou
- présente une épaisseur comprise entre 0,6 et 5 mm, de préférence entre 0,8 et 2 mm, et/ou
- présente un grammage compris entre 100 et 500 g/m², de préférence entre 230 et 290 g/m².

7. Filtre (10) selon la revendication 5 ou 6, dans lequel le dispositif de cadre (31) du premier élément filtrant (3) est réalisé en forme de bande, de ruban et/ou de manière plane le long d'un côté longitudinal et/ou large du corps de milieu filtrant (33).

8. Filtre (10) selon l'une quelconque des revendications précédentes, dans lequel le dispositif de cadre (31) du premier élément filtrant (3) a, à son extrémité axiale tournée vers le couvercle de boîtier de filtre (22), au moins sur une partie de sa circonférence, une section de bord (311) rabattue vers le corps de milieu filtrant (33), qui fournit une surface d'introduction de force (312) dirigée axialement pour introduire la force de serrage provenant du couvercle de boîtier de filtre (22).

9. Filtre (10) selon l'une quelconque des revendications précédentes, dans lequel le dispositif de cadre (41) du second élément filtrant (4) présente un cadre en matière plastique qui présente de préférence un collet (411) en saillie radiale au moins partiellement périphérique qui porte le joint d'étanchéité (42), le collet (411) en saillie radiale étant de préférence espacé axialement d'une extrémité axiale du corps de milieu filtrant (43).

10. Filtre (10) selon la revendication 9, dans lequel le joint d'étanchéité (42) du second élément filtrant (4) s'étend depuis le collet (411) en saillie radiale dans la direction axiale jusque dans une zone située à côté du corps du milieu filtrant (43) du second élément filtrant (4).

11. Filtre (10) selon l'une quelconque des revendications précédentes, dans lequel le joint d'étanchéité (42) du second élément filtrant (4) présente une rigidité à la compression dans une plage de 0,05 à 0,7 N/mm par mm de ligne d'étanchéité, de préférence de 0,1 à 0,25 N/mm par mm de ligne d'étanchéité.

12. Filtre (10) selon l'une quelconque des revendications précédentes, dans lequel le dispositif de cadre (31) du premier élément filtrant (3) dépasse axialement, à son extrémité axiale tournée vers le second élément filtrant (4), le corps de milieu filtrant (33) du premier élément filtrant (3).

13. Filtre (10) selon l'une quelconque des revendications précédentes, dans lequel le corps de milieu filtrant (31) du premier élément filtrant (3) présente un milieu filtrant particulaire et/ou un milieu adsorbant de gaz et/ou le corps de milieu filtrant (43) du second élément filtrant (4) présente un milieu filtrant HEPA.

14. Utilisation d'un élément filtrant (4) en tant que second élément filtrant (4) dans un filtre (10) selon l'une quelconque des revendications 1 à 13, dans laquelle l'élément filtrant (4) présente un corps de milieu filtrant (43) et un dispositif de cadre (41) entourant le corps de milieu filtrant (43), dans laquelle un couvercle de boîtier de filtre (22) exerce, à l'état monté, une force de serrage dirigée au moins partiellement axialement sur un dispositif de cadre (31) d'un premier élément filtrant (3), et
- le dispositif de cadre (31) du premier élément filtrant (3) s'applique, à son extrémité axiale opposée au couvercle de boîtier de filtre (22), à l'état monté, contre le dispositif de cadre de l'élément filtrant, dans laquelle la force de serrage est transmise au dispositif de cadre de l'élément filtrant (4),
- dans lequel le dispositif de cadre (41) de l'élément filtrant (4) présente un joint d'étanchéité périphérique (42) qui, à l'état monté, peut être pressé au moyen de la force de serrage sur un épaulement de contact (27) du boîtier de filtre (2),
- et dans lequel le joint d'étanchéité périphérique (42) de l'élément filtrant (4) présente un profil de chambre creuse.

15. Véhicule automobile (100) comprenant un filtre (10) selon l'une quelconque des revendications 1 à 13.
